# EUROPEAN PATENT APPLICATION

(11) **EP 1 815 752 A1**
(43) Date of publication of application: **08.08.2007**
(21) Application number: 06002175.5
(22) Date of filing: 02.02.2006
(51) Int. Cl.: A23L 1/00, A23D 9/05, A23C 9/16

(54) **Improvement of cold liquid solubility of fat-containing powders**

(71) Applicant: NESTEC S.A., 1800 Vevey (CH)
(72) Inventor: Zeltner, Peter, CH-3048 Worblaufen (CH); Niederreiter, Gerhard, CH-3510 Konolfingen (CH); Wyss, Heinz, CH-3672 Oberdiessbach (CH)
(74) Representative: Rupp, Christian

(57) **Abstract**

A fat-containing powder according to the present invention comprises up to 50% fat, whereby the fat surface of the powder particles is associated with a particulate flowing agent.

## Description

### Field of the invention

The present invention relates to the field of powders, in particular fat-containing powders having improved cold liquid (e.g. water) solubility, and to the method of producing such powders.

### Background

During the last few decades there has been a growing market for powders which are instantly soluble in cold liquids. Such powders find applications in the making of beverages or liquid comestibles based on dry, powdered nutritional ingredients.

The reconstitution of powders in liquids can be separated in four steps, namely wettability, submerging/sinking, dispersing and dissolving. Although there are no sharp borderlines between these individual reconstitution steps, wettability is commonly regarded as the most influential factor as it controls the penetration of the water/liquid in the powder bulk.

Many investigations have shown that wettability is mainly influenced by the contact angle of the powder to the solvent, which in turn is dependent on the fat content of the powder, and the particle size of the powder. Other factors which influence the wettability of powders in terms of liquid penetration include the powder porosity, the viscosity of the liquid and the surface tension between the liquid and the powder.

In this respect, it has been known for a long time that an agglomerated powder, i.e. a powder where the single particles have formed bigger granulates or agglomerates, possesses improved wettability when mixed with water than it is the case with ordinary powder.

For instance, US 3,821,436 describes powders to be used in foods which are free-flowing, non-hygroscopic and easily water soluble in both hot and cold liquids. The examples therein show that wettability and therefore solubility in water at 9°-10°C are influenced by the size of the particles.

Agglomeration is however not sufficient in the case of fat-containing powders, as these tend to have a thin layer of fat on the surface of the particles, making them repellent in cold water. Indeed, the fat-covered surface of the powder will be hydrophobic resulting in a high contact angle of the powder to the liquid which will therefore render the powder less wettable and less soluble.

Furthermore, if the melting point of the fat is higher than the temperature of the solvent, these powders will show even worse wettability.

Until now, the solution to this problem was the use of surface active agents (surfactants), such as soy lecithin for example, which can modify the surface properties of these powders.

However, the use of surfactants can also negatively influence other properties of these powders such as flowability and can even affect the organoleptic properties (e.g. characteristic soy flavour).

It is the object of the present invention to improve the solubility of fat-containing powders in a cold liquid such as e.g. water.

### Summary

This object is achieved by means of the features of the independent claims. The dependent claims develop further the central idea of the present invention.

To this end, the present invention proposes, in a first aspect, a fat-containing powder composition which is soluble in cold liquids. The fat surface of the powder particles is associated with a particulate flowing agent.

More specifically, the invention provides powder particles which can be covered with fat. The particles' surface has associated with it particles of a flowing agent having a smaller average diameter size.

According to a second aspect of the invention, there is provided a method of improving the solubility of fat-containing powders, comprising the step of adding a particulate flowing agent to said powder.

Furthermore, according to a third aspect of the invention, the use of a particulate flowing agent to improve the solubility of fat-containing powders in cold liquids is provided.

The invention will now be described in detail by means of an illustrative embodiment of the invention and the figure of the enclosed drawings.

The percentages indicated in the description relate to percentages by weight except when otherwise stated.

### Short description of the figure

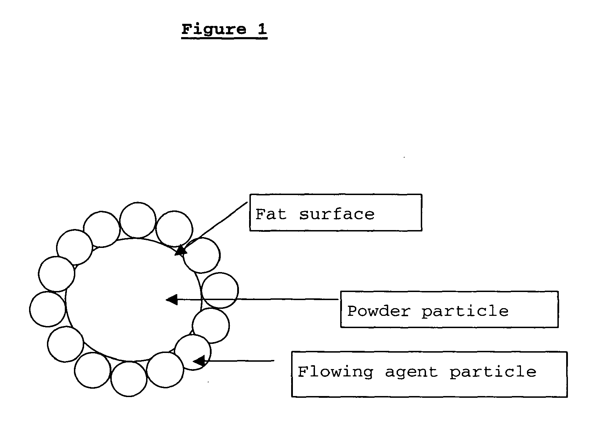

Figure 1 shows an individual powder particle as can be found in the powder composition of the present invention. The powder particle comprises a fatty surface to which the particles of flowing agent can adhere. Although the dimensions in figure 1 are not drawn to scale, the flowing agent particles are in any case smaller than the powder particle.

### Detailed description of the invention

Preferably, a fat-containing powder according to the present invention can comprise at least 0.1% up to 50% fat. The surface of the powder particles is associated with a particulate flowing agent.

This is schematically shown in figure 1. As can be seen in the figure, the flowing agent particles are smaller in size compared to the powder particles. This allows the powder particle to come in contact with several flowing agent particles, such that these become closely associated with the surface of the powder particle. This results in a powder particle which is surrounded by adhering flowing agent particles. The intermolecular forces between the powder particle surface and the flowing agent particles are such that they create a tight association between the powder particle and the flowing agent particles. It is this "coating" of the powder particle with flowing agent particles which is suspected to improve the cold-water solubility of fat-containing powders.

This adhesion of flowing agent particles to the powder particles results in a modification of the surface properties of the powder.

In the case of fat-containing powders, the hydrophobic surface character of fat-containing powders is modified resulting in a more hydrophilic surface, which renders the powder more soluble in cold liquids. It is thought that the wettability properties of the flowing agent determine the wettability of the "coated" fat-containing powders.

It is also suspected that the coupling of flowing agent particles to the powder particles increases the wettability of the powder in cold liquids. An amelioration in wettability - one of the steps in powder reconstitution - will inevitably facilitate solubility of the powder.

For the improvement of the solubility, the porosity of the flowing agent particles and as a consequence the density of the flowing agent is also important. The higher the porosity (and therefore the lower the density), the better the solubility. Preferably, the flowing agent has a tapped density lower than 100g/l. A low tapped density of the flowing agent is advantageous in the coating of powder particles since a smaller amount of flowing agent is then needed for the same effect.

According to the present invention, the particulate flowing agent can be selected from silica, sodium silico aluminate, aluminium silicate and the like. Preferably, it is silica (silicon dioxide) having an average particle diameter size of less than 300 microns, more preferably less than 200 microns, even more preferably between 1 and 20 microns, most preferably between 2 and 7 microns.

The average diameter size of the powder itself can be e.g. in the range of 100 to 500 microns, preferably 200 to 400 microns.

The dimensions of the particulate flowing agent are thus smaller than the dimensions of the powder in order to make possible a coating as shown in Figure 1.

Without wishing to be bound by theory, it is thought that the use of particles of flowing agent which are small in diameter provides the advantage that the Van-der-Waals forces are high enough to fix the flowing agent particles to the surface of the fat containing particle. This has the beneficial effect of modifying the properties of the surface of the powder rendering it more hydrophilic and therefore more water soluble, in particular more soluble in cold water (having a temperature of e.g. 5°C).

The particulate flowing agent present in a powder composition according to the invention is preferably present in an amount of 0.1% to 10% by weight, most preferably of 1% to 5% by weight of the powder. The exact amount will also depend on the fat content of the powder. The lower the fat content, the less amount of flowing agent is needed.

The synergistic advantage conferred by using flowing agents of small size in the quantities described above is an unexpected improvement in the flowability and wettability of the powder obtained.

A fat-containing powder composition according to the present invention may comprise from 0.1% up to 50% fat, whereby the fat source is of animal and/or vegetable origin. Applying the invention, the fat can be selected from low-melting fats, high-melting fats or combinations thereof.

By "low melting" fat is meant any fat which has a melting point lower than 0°C. Examples of such fat are lard, soybean oil, vegetable oil, canola oil, rapeseed oil, cottonseed oil, coconut oil, medium-chain triglyceride oil, etc.

By "high melting" fat is meant any fat which has a melting point higher than 0°C. Examples of such "high melting fat" are butter fat, tallow, hydrogenated tallow, hydrogenated oils, palm oil, peanut oil, etc.

According to the invention, a combination of high melting to low melting fat in a ratio ranging from 0:1 to 3:1 may be used.

In a preferred embodiment of the invention, the ratio of high-melting to low-melting is 2:1. It has indeed been surprisingly found that a combination of high and low-melting point fats, such that the total fat content consists in 2/3 wt. % high melting fat and 1/3 wt. % low melting fat, improves the cold-water solubility of powders. This effect is unexpected in view of the knowledge that the melting point of fat is usually considered as a critical factor in cold solvent solubility. Furthermore, the combination offers the surprising advantage that less flowing agent is needed to achieve the cold-water solubility in comparison to the amount needed when only high-melting point fats are independently used.

The blend of high and low melting fats is selected to take into account physical characteristics and flavour and has the advantage of providing better stability to the powder composition as well as offering considerable cost advantage.

The powder composition of the present invention may comprise at least one additional constituent selected from proteins and carbohydrates. The preferred source of carbohydrates are for example maltodextrins, which can be used in the powder composition of the invention in amounts up to 60%, even up to 75%. A preferred source of protein is provided by milk solids non-fat (MSNF), which may be present in the composition in amounts up to 60%.

The powder composition of the present invention may further comprise stabilisers. These may include carob flour, guar flour, alginates, carboxymethylcellulose, xanthan, carrageenan, gelatine, starches, egg albumen, soya albumen used alone or in the form of a mixture in an amount of 0.1% to 0.7%.

Other optional additional ingredients include emulsifiers which may include distilled monoglycerides, mono- and diglycerides, acetic acid esters of monoglycerides, organic acid esters of monoglycerides, sorbitan esters of fatty acids, propylene glycol esters of fatty acids, polyglycerol esters of fatty acids, soy bean lecithin, split lecithin and any combinations of the above in an amount of 0.1% to 1%.

The powder composition may further comprise vitamins, minerals, colourings such as beta-carotene for example, and/or any type of flavourings which may contain a sweetening agent such as dextrose or sucrose for example.

The powder compositions of the present invention when mixed with liquids provide instant beverages such as coffee, chocolate, fruit drinks, milk-based beverages, cocktails, liquid comestibles etc. The powder compositions of the present invention can be further mixed with other dry ingredients, such as for example instant coffee granules, sugar etc. to form a powder mix composition (e.g. coffee mixes). They may also form the basis of infant formulae.

The improvements in wettability and solubility in cold liquids of the fat-containing powders of the invention are all the more surprising in view of the fact that flowing agents are traditionally used to prevent caking (i.e. moisture absorption of powders) in ordinary powders.

The invention also provides superior effects compared with ordinary powders found in the art which are normally limited to the use of low melting fats and are coated with surfactants - traditionally used as "surface modifiers" in fat-containing powders - which can affect the taste and the flowability of fat-containing powders.

For carrying out the process of the invention, the fat-containing powder may be manufactured according to means well-known in the art. For example, a combination of ingredients may be mixed with water or another liquid ingredient to form a uniform dispersion. The mixture is pasteurised and evaporated to about 35%-75% solids, depending on the composition, after which the concentrate is homogenised and finally dried. The drying temperature may vary between 70°C and 100°C depending on the composition, on the carbohydrate and fat content, on the total solids of the concentrate etc. The composition may be dried in a conventional spray drier to form a uniform powder. The particulate flowing agent may then be added to the manufactured powder and mixed thoroughly so that the powder particles, in particular the fat surface of the powder particles, become associated with the particulate flowing agent.

This offers the advantage that no further processing (such as agglomeration for example) is needed. The resulting powder has modified reconstitution properties without any additional costly processing steps.

The invention is described below with reference to examples of preferred embodiments and modes of formulation. However, various adaptations and/or modifications may be made while remaining within the scope of the present invention.

### Examples

**Recipe A (high-melting fat)**

| **Recipe A** | **Weight percentage** |
|---|---|
| Milk derivates | 40-50 |
| High melting fat | 30-50 |
| Carbohydrates | 9-10 |
| Minerals | 2-3 |
| Flowing agent | 1-3 |

**Recipe B (mix of high and low-melting fat)**

| **Recipe B** | **Weight percentage** |
|---|---|
| High melting fat | 20-30 |
| Low melting fat | 7-10 |
| Emulsifier(s) | 0.1-1 |
| Milk derivates | 2-3 |
| Carbohydrates | 50-60 |
| Minerals | 3-4 |
| Flowing agent | 1-3 |

**Recipe C (low-melting fat)**

| **Recipe C** | **Weight percentage** |
|---|---|
| Milk derivates | 50-60 |
| Low melting fat | 25-35 |
| Carbohydrates | 9-10 |
| Minerals | 2-3 |
| Flowing agent | 1-5 |

The recipes described above exhibit good cold water solubility.

### Example 2: comparative examples.

The following comparative tests show the influence of particle size and density of different flowing agents on the cold water solubility of a fat-containing powder. The tests are carried out on a powder according to recipe A, wherein the flowing agent is modified for each test.

The reconstitution behaviour of the powder is evaluated by an adapted dissolution test. 18g of powder is poured in a beaker with 150mL cold water (lower than 5 °C). The sinking performance of the powder is observed in the first time interval of 5 seconds. The amount of non-dissolvable powder is determined by sieving after additional 15 seconds of stirring with a spoon. The sieve is pictured and evaluated. No or less residue on the sieve means a good cold water solubility

Flowing agent: silica, particle size 100 µm, tapped density 280 g/1.

**Table 1**

| **Flowing agent content** | **Residue in sieve (in g)** |
|---|---|
| 0% | 15.5 |
| 1% | 16 |
| 2% | 15.5 |
| 3% | 16.3 |
| 4% | 15 |
| 5% | 9.5 |

Flowing agent: silica, particle size 5 µm, tapped density 75 g/l.

**Table 2**

| **Flowing agent content** | **Residue in sieve (in g)** |
|---|---|
| 0% | 17 |
| 1% | 5.5 |
| 2% | 1.8 |
| 3% | 1.8 |
| 4% | 1.8 |
| 5% | 2 |

Flowing agent: aluminium silicate, particle size 5 µm, tapped density 300 g/l.

**Table 3**

| **Flowing agent content** | **Residue in sieve (in g)** |
|---|---|
| 0% | 16.5 |
| 1% | 16 |
| 2% | 15 |
| 3% | 13 |
| 4% | 8 |
| 5% | 1 |

Flowing agent: silica, particle size 3 µm, tapped density 70 g/l.

**Table 4**

| **Flowing agent content** | **Residue in sieve (in g)** |
|---|---|
| 0% | 18 |
| 1% | 14 |
| 2% | 3.5 |
| 3% | 2 |
| 4% | 2 |
| 5% | 2.2 |

Flowing agent: silica, particle size 15 µm, tapped density 175 g/l.

**Table 5**

| **Flowing agent content** | **Residue in sieve (in g)** |
|---|---|
| 0% | 17 |
| 1% | 13 |
| 2% | 11.5 |
| 3% | 11 |
| 4% | 6 |
| 5% | 3 |

From the tables above, it is apparent that a small particle size as well as a low tapped density (high porosity) is desirable to achieve cold water solubility.

## Claims

1. Fat-containing powder composition which is soluble in cold liquids,
**characterised in that**
the fat surface of the powder particles is associated with a particulate flowing agent.

2. Powder composition according to claim 1,
wherein the particulate flowing agent is selected from silica, sodium silico aluminate, aluminium silicate, or any combinations thereof.

3. Powder composition according to claims 1 and 2,
wherein the particle size of the flowing agent is smaller than the average powder particle size.

4. Powder composition according to claims 1 to 3,
wherein the particulate flowing agent has an average particle size of less than 300 microns.

5. Powder composition according to any of the preceding claims,
wherein the particulate flowing agent has an average particle size of less than 200 microns.

6. Powder composition according to any of the preceding claims,
wherein the particulate flowing agent has an average particle size of between 1 and 20 microns.

7. Powder composition according to any of the preceding claims,
wherein the particulate flowing agent has an average particle size of between 2 and 7 microns.

8. Powder composition according to any of the preceding claims,
wherein the particulate flowing agent has a tapped density of less than 100g/l.

9. Powder composition according to any of the preceding claims,
wherein the particulate flowing agent is present in an amount of 0.1% to 10% by weight of the powder composition.

10. Powder composition according to any of the preceding claims,
wherein the particulate flowing agent is present in an amount of 1% to 5% by weight of the powder composition.

11. Powder composition according to any of the preceding claims,
wherein the total fat content of the composition is between 0.1% and 50% by weight.

12. Powder composition according to claim 11,
wherein the fat has a melting point below 0 °C.

13. Powder composition according to claim 11,
wherein the fat has a melting point above 0 °C.

14. Powder composition according to claims 11 to 13,
wherein the fat consists of a ratio of high melting fat to low melting fat in the range of 0:1 to 3:1.

15. Powder composition according to claims 11 to 14,
wherein the total fat content consists in 2/3 wt.% high melting fat and 1/3 wt.% low melting fat.

16. Powder composition according to any of the preceding claims,
wherein the composition comprises at least one additional constituent selected from proteins and carbohydrates.

17. Powder composition according to any of the preceding claims,
wherein the composition comprises at least one additional ingredient selected from stabilisers, emulsifiers, vitamins, minerals, flavour modifiers, colorants etc.

18. Powder particles of a food ingredient,
**characterised in that**
the powder particles' surfaces have associated with them particles of a particulate flowing agent having a smaller average diameter than the average powder particle diameter.

19. Powder particles according to claim 18, wherein the flowing agent particles' dimension is at least ten times smaller than the average powder particles size.

20. Method of improving the solubility of fat-containing powders in cold liquids, comprising the step of adding a particulate flowing agent to said powder.

21. Method according to claim 20,
wherein the particulate flowing agent is selected from silica, sodium silico aluminate, aluminium silicate, or any combinations thereof.

22. Method according to claims 20 and 21,
wherein the particle size of the flowing agent is smaller than the average powder particle size.

23. Method according to claims 20 to 22,
wherein the particulate flowing agent has an average particle size of less than 300 microns.

24. Method according to claims 20 to 23,
wherein the particulate flowing agent has an average particle size of between 2 and 7 microns.

25. Method according to claims 20 to 24,
wherein the particulate flowing agent is present in an amount of 0.1% to 10% by weight of the powder composition.

26. Method according to claims 20 to 25,
wherein the total fat content of the composition is between 0.1% and 50% by weight.

27. Method according to claim 26,
wherein the ratio of high melting fat to low melting fat is in the range of 0:1 to 3:1.

28. Use of a particulate flowing agent to improve the cold water solubility of food and food ingredient powders.

29. Use according to claim 28,
wherein the particulate flowing agent is selected from silica, sodium silico aluminate, aluminium silicate, or any combinations thereof.

30. Use according to claims 28 and 29,
wherein the particle size of the flowing agent is smaller than the average powder particle size.

31. Use according to claims 28 to 30,
wherein the particulate flowing agent has an average particle size of less than 300 microns.

32. Use according to 28 to 31,
wherein the particulate flowing agent is present in an amount of 0.1% to 10% by weight of the powder composition.
